# EUROPÄISCHE PATENTSCHRIFT

(11) **EP 3 449 138 B1**
(45) Veröffentlichungstag und Bekanntmachung des Hinweises auf die Patenterteilung: **29.03.2023**
(21) Anmeldenummer: 17721994.6
(22) Anmeldetag: 27.04.2017
(51) Int. Cl.: F16B 25/00

(54) **SCHRAUBE ZUM EINFURCHEN EINES GEWINDES**
SCREW FOR CUTTING A THREAD
VIS SERVANT À TARAUDER UN FILETAGE

(30) Priorität: 29.04.2016 DE 202016002905 U
(43) Veröffentlichungstag der Anmeldung: 06.03.2019
(73) Patentinhaber: Arnold Umformtechnik GmbH & Co. KG, 74670 Forchtenberg-Ernsbach (DE)
(72) Erfinder: JAKOB, Thomas, 34292 Ahnatal (DE); WERTHWEIN, Bernd, 74670 Forchtenberg-Sindringen (DE)
(74) Vertreter: Patentanwälte Ruff, Wilhelm, Beier, Dauster & Partner mbB
(86) Internationale Anmeldenummer: PCT/EP2017/060031
(87) Internationale Veröffentlichungsnummer: WO 2017/186838

(56) Entgegenhaltungen:
- EP-A1- 0 012 441
- WO-A1-2008/156425
- DE-A1- 2 706 246
- DE-A1-102010 000 702

## Beschreibung

Die Erfindung betrifft eine Schraube zum Einfurchen eines Gewindes in ein Bauteil mit einem Schaft, der wenigstens abschnittsweise mit einem Gewinde versehen ist, einem Schraubenkopf mit einer Antriebsausbildung, an den sich der Schaft anschließt, wobei, von einem dem Kopf gegenüberliegenden Ende des Schafts ausgehend, zunächst ein Furchabschnitt und dann ein Halteabschnitt angeordnet sind, wobei der Furchabschnitt und der Halteabschnitt mit einem Gewinde versehen sind.

Aus der europäischen Offenlegungsschrift EP 0 012 441 A1 ist eine selbstfurchende Bohrschraube bekannt, die ein Gewinde in relativ weiche Materialien, beispielsweise Kunststoff, einfurchen kann. Die Schraube ist mit einer Bohrspitze versehen, die eine Spannut und ein Gewinde aufweist. Die gesamte Bohrspitze ist mit einem Gewinde versehen, dessen Außendurchmesser kleiner ist als der Außendurchmesser des Gewindes, das sich zwischen der Bohrspitze und dem Schraubenkopf befindet.

Aus der deutschen Offenlegungsschrift DE 10 2010 000 702 A1 ist eine gewindeformende Schraube bekannt. Die Schraube dient zur Anbringung eines Elements an einer Blechkomponente, wobei sie in ein vorhandenes Loch in der Blechkomponente eingreift und das Gewinde selbst formt. Dabei kann sie auch das Loch vergrößern und einen Durchzug formen. Die Schraube weist einen polygonalen Querschnitt, einen vom Schraubenkopf ausgehenden Gewindeabschnitt und einen sich an den Gewindeabschnitt anschließenden, bis zu einem vorderen abgerundeten Schraubenende reichenden gewindefreien Formabschnitt auf.

Aus der deutschen Offenlegungsschrift DE 27 06 246 A1 ist eine Schraube zum Einfurchen eines Gewindes in ein Bauteil bekannt. Die Schraube weist einen Furchabschnitt und einen Halteabschnitt auf. Sowohl im Furchabschnitt als auch im Halteabschnitt weist der Schaft der Schraube einen vieleckartigen Querschnitt mit abgerundeten Ecken und konvex gewölbten Seitenkanten auf. Im Halteabschnitt ist eine Höckeraufwölbung des vieleckartigen Querschnitts wesentlich kleiner als eine Höcker-Aufwölbung im Furchabschnitt.

Aus der internationalen Offenlegungsschrift WO 2008/156425 A1 ist eine Schraube zum Einfurchen eines Gewindes in ein Bauteil bekannt. Die Schraube weist über die gesamte Länge ihres Schafts einen kreisförmigen Querschnitt auf. Das Gewinde weist abgerundete Täler zwischen den Gewindeflanken auf.

Mit der Erfindung soll eine Schraube zum Einfurchen eines Gewindes in Bezug auf ihre Tragkraft verbessert werden.

Erfindungsgemäß ist hierzu eine Schraube mit den Merkmalen von Anspruch 1 vorgesehen. Vorteilhafte Weiterbildungen der Erfindung sind in den Unteransprüchen angegeben. Vorgesehen ist eine Schraube zum Einfurchen eines Gewindes in ein Bauteil mit einem Schaft, der wenigstens abschnittsweise mit einem Gewinde versehen ist, und einem Schraubenkopf mit einer Antriebsausbildung, an den sich der Schaft anschließt, wobei, von einem den Kopf gegenüberliegenden Ende des Schafts ausgehend, zunächst ein Furchabschnitt und dann ein Halteabschnitt angeordnet sind, wobei der Furchabschnitt und der Halteabschnitt mit einem Gewinde versehen sind und wobei der Halteabschnitt gegenüber dem Furchabschnitt einen größeren Außendurchmesser aufweist.

Indem der Halteabschnitt gegenüber dem Furchabschnitt einen größeren Außendurchmesser aufweist, wird ein verbesserter Eingriff des Halteabschnitts in das in das Bauteil eingefurchte Gewinde erreicht. Dadurch wird die Tragkraft der Schraube verbessert und insbesondere kann das Ausreißen des gefurchten Gewindes beim Anziehen der Schraube vermieden werden.

Gemäß der Erfindung weist der Halteabschnitt einen runden Querschnitt auf.

Auf diese Weise lässt sich eine optimale Anpassung des Halteabschnitts an das eingefurchte Gewinde und dadurch eine Erhöhung der Tragkraft erreichen.

Gemäß der Erfindung weist der Furchabschnitt einen vieleckartigen Querschnitt mit abgerundeten Ecken und konvex gewölbten Seitenkanten auf, insbesondere einen trilobularen Querschnitt.

Mittels eines solchen Querschnitts im Furchabschnitt lässt sich das Einfurchen des Gewindes gegenüber einem runden Querschnitt verbessern.

Gemäß der Erfindung ist eine Höhe der Gewindeflanken, gemessen in radialer Richtung, im Halteabschnitt größer als im Furchabschnitt.

Auch durch eine größere Höhe der Gewindeflanken im Halteabschnitt gegenüber dem Furchabschnitt lässt sich eine Tragkraft der Schraube im Halteabschnitt erhöhen.

Gemäß der Erfindung ist eine Breite der Gewindeflanken, gemessen parallel zu einer Mittellängsachse des Schafts, im Furchabschnitt wenigstens an der Basis der Gewindeflanken größer als im Halteabschnitt.

Eine breite Basis sorgt für stabile Gewindeflanken, die beim Einfurchen des Gewindes benötigt werden. Im Halteabschnitt hingegen ist zu einer Erhöhung der Tragkraft ein möglichst gut angepasster Eingriff der Gewindeflanken in das eingefurchte Gewinde erwünscht. Hierzu dienen dann an ihrer Basis schmälere Gewindeflanken im Halteabschnitt.

Gemäß der Erfindung ist die Breite der Gewindeflanken an ihrem radial äußeren Ende im Furchabschnitt größer als im Halteabschnitt.

Auch das radial äußere Ende der Gewindeflanken ist erfindungsgemäß im Furchabschnitt breiter als im Halteabschnitt. Im Furchabschnitt werden stabile Gewindeflanken benötigt, um ein Gewinde Einfurchen zu können. Im Halteabschnitt hingegen wird auf einen optimalen Eingriff der Gewindeflanken in das eingefurchte Gewinde geachtet, um die Tragkraft zu erhöhen.

In Weiterbildung der Erfindung ist der Halteabschnitt zylindrisch ausgebildet.

In Weiterbildung der Erfindung ist zwischen dem Halteabschnitt und dem Furchabschnitt ein kegelstumpfartiger, mit Gewinde versehener Zwischenabschnitt angeordnet.

In Weiterbildung der Erfindung weist der Furchabschnitt einen kegelstumpfartigen Ansetzabschnitt auf und kann zusätzlich einen zylindrischen Kalibrierabschnitt aufweisen.

Nach einer alternativen Ausgestaltung der Erfindung ist der Furchabschnitt insgesamt kegelstumpfartig ausgebildet. Der kegelstumpfartige Zwischenabschnitt kann dann nahtlos in den Furchabschnitt übergehen.

In Weiterbildung der Erfindung ist ein Übergang zwischen den Gewindeflanken zweier benachbarter Gewindegänge im Halteabschnitt konvex ausgerundet.

Auf diese Weise wird ein verbesserter Eingriff in die Gewindegänge des eingefurchten Gewindes erreicht.

In Weiterbildung der Erfindung ist ein Übergang zwischen den Gewindeflanken zweier benachbarter Gewindegänge im Furchabschnitt V-förmig ausgebildet.

In Furchabschnitt dient ein V-förmiger Übergang zwischen den Gewindeflanken zur Realisierung von in Längsrichtung des Schafts gesehen breiten und damit stabilen Gewindeflanken an der Basis. Dadurch ist die Belastbarkeit der Gewindeflanken im Furchabschnitt größer, so dass das Einfurchen des Gewindes erleichtert bzw. verbessert wird.

Weitere Merkmale und Vorteile der Erfindung ergeben sich aus den Ansprüchen und der folgenden Beschreibung bevorzugten Ausführungsformen der Erfindung im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: eine schematische Seitenansicht einer erfindungsgemäßen Schraube gemäß einer ersten Ausführungsform,
- Fig. 2: eine Ansicht auf die Schnittebene A-A in Fig. 1,
- Fig. 3: eine Ansicht auf die Schnittebene B-B in Fig. 1,
- Fig. 4: eine vergrößerte Darstellung der Einzelheit C in Fig. 1,
- Fig. 5: eine vergrößerte Darstellung der Einzelheit D in Fig. 1,
- Fig. 6: eine schematische Seitenansicht einer nicht erfindungsgemäßen Schraube gemäß einer zweiten Ausführungsform,
- Fig. 7: eine Ansicht auf die Schnittebene A-A in Fig. 6,
- Fig. 8: eine Ansicht auf die Schnittebene B-B in Fig. 6,
- Fig. 9: eine vergrößerte Darstellung der Einzelheit C in Fig. 6 und
- Fig. 10: eine vergrößerte Darstellung der Einzelheit D in Fig. 6.

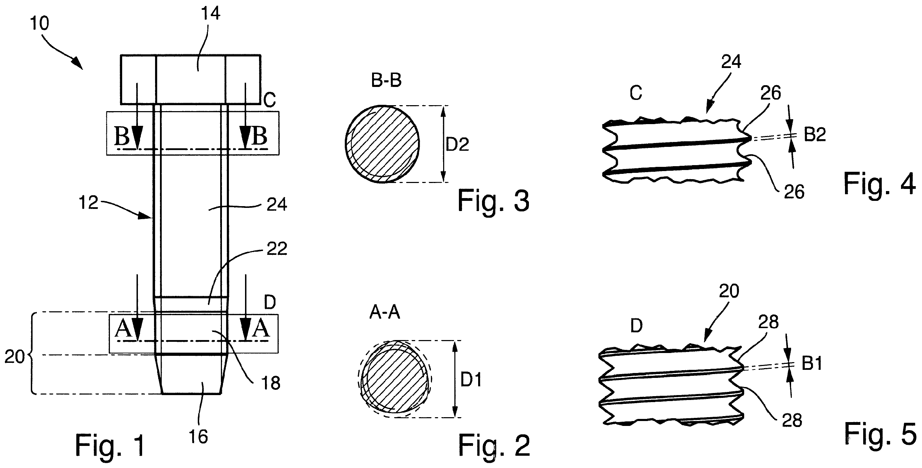

Die schematische Seitenansicht der Fig. 1 zeigt eine erfindungsgemäße Schraube 10 gemäß einer ersten Ausführungsform, die einen Schaft 12 und einen Schraubenkopf 14 aufweist. Der Schraubenkopf 14 ist mit einer Antriebsausbildung versehen, die bei der dargestellten Ausführungsform als Außensechskant ausgebildet ist.

Die Schraube 10 ist als Furchschraube oder Schraube zum Einfurchen eines Gewindes in ein Bauteil ausgebildet. Beim Einfurchen eines Gewindes wird zunächst ein Kernloch in dem Bauteil hergestellt. Die Herstellung des Kernlochs kann auf verschiedene Art und Weise erfolgen, beispielsweise mittels Bohren, Stanzen, Lasern oder beim Urformen des Bauteils, insbesondere beim Gießen. Das Kernloch kann darüber hinaus durch die Schraubenspitze selbst hergestellt werden. Die Schraube 10 formt dann während des Eindrehens ein Gewinde in dem Bauteil. Das in dem Bauteil hergestellte Kernloch muss daher nicht zunächst in einem separaten Arbeitsschritt mit einem Gewinde versehen werden. Dennoch kann die Schraube 10 auch wieder aus dem von ihr selbst eingefurchten Gewinde herausgedreht werden. Bekannt sind Spezialschrauben, die mittels plastischer Verformung auch ein Kernloch in dem Bauteil selbst formen. Solche Schrauben werden als fließlochformende Schrauben bezeichnet und weisen in der Regel eine glatte und abgerundete Spitze auf, die dann zunächst einen Durchzug oder eine Öffnung in einem Bauteil herstellt. Auf die glatte Spitze folgt dann ein Furchabschnitt und ein Halteabschnitt der Schraube. Auch auf solche fließlochformende Schrauben kann die vorliegende Erfindung angewendet werden.

Die Schraube 10 weist von ihrem, dem Schraubenkopf 14 gegenüberliegenden Ende zunächst einen Ansetzabschnitt 16 auf, der kegelstumpfförmig ausgebildet ist. Auf den Ansetzabschnitt 16 folgt ein Kalibrierabschnitt 18, der zylindrisch ausgebildet ist. Der Ansetzabschnitt 16 und der Kalibrierabschnitt 18 bilden gemeinsam einen Furchabschnitt 20, mit dem in eine bestehende Bohrung ein Gewinde eingefurcht werden kann. An den Furchabschnitt 20 schließt sich ein Zwischenabschnitt 22 an, der kegelstumpfförmig ausgebildet ist. Auf den Zwischenabschnitt 22 folgt dann ein Halteabschnitt 24, der zylindrisch ausgebildet ist und der gegenüber dem Furchabschnitt 20 einen größeren Außendurchmesser aufweist. Der Zwischenabschnitt 22 dient somit dazu, einen Übergang zwischen dem Furchabschnitt 20 mit kleinerem Außendurchmesser und dem Halteabschnitt 24 mit größerem Außendurchmesser herzustellen.

In Fig. 2 ist eine Ansicht auf die Schnittebene A-A in Fig. 1 dargestellt. Zu erkennen ist, dass die Schraube 10 im Furchabschnitt 20 einen trilobularen Querschnitt aufweist. Als trilobularer Querschnitt wird ein Querschnitt bezeichnet, der drei abgerundete Ecken und drei konvex gewölbte Seitenkanten aufweist. Ein Außendurchmesser des polybularen oder polygonalen Querschnitts wird durch einen Umkreis um den Querschnitt mit einem Durchmesser D1 bestimmt.

Die Schnittebene A-A geht durch den Kalibrierabschnitt 18 des Furchabschnitts 20. Auch im Ansetzabschnitt 16 weist der Furchabschnitt 20 einen trilobularen Querschnitt auf. Der trilobulare Querschnitt erleichtert das Einfurchen des Gewindes.

Die Darstellung der Fig. 3 zeigt eine Ansicht auf die Schnittebene B-B in Fig. 1. Zu erkennen ist, dass der Halteabschnitt einen kreisförmigen Querschnitt mit einem Außendurchmesser D2 aufweist. D2 ist größer als D1 und, wie bereits ausgeführt wurde, ist der Zwischenabschnitt 22 kegelstumpfförmig ausgebildet, um einen Übergang von dem Furchabschnitt 20 mit dem kleineren Außendurchmesser D1 auf den Halteabschnitt 24 mit dem größeren Außendurchmesser D2 zu bilden.

Die Darstellung der Fig. 4 zeigt die vergrößerte Einzelheit C aus Fig. 1. Zu erkennen ist, dass der Halteabschnitt 24 Gewindeflanken 26 aufweist, wobei ein Übergang zwischen einander benachbarten Gewindeflanken 26 abgerundet ausgebildet ist. Die Gewindeflanken 26 weisen an in radialer Richtung außengelegenen Ende eine Breite B2 auf.

Die Darstellung der Fig. 5 zeigt die Einzelheit D aus Fig. 1. Wie zu erkennen ist, weist der Furchabschnitt 20, hier dargestellt im Bereich des Kalibrierabschnitts 18, einen V-förmig ausgebildeten Übergang zwischen den einzelnen Gewindeflanken 28 auf. Durch den V-förmigen Übergang zwischen den einzelnen Gewindeflanken 28 in Furchabschnitt 20 wird erreicht, dass eine Basis der Gewindeflanken 28, also eine Breite der Gewindeflanken 28 auf Höhe der Spitze des V-artigen Übergangs, in Fig. 5 gemessen von oben nach unten, also in Längsrichtung des Schafts, größer ist als die entsprechende Breite der Basis der Gewindeflanken 26 im Halteabschnitt 24.

An ihrem radial außenliegenden Ende weisen die Gewindeflanken 28 im Furchabschnitt 20 eine Breite B1 auf. Diese Breite B1 ist größer als die Breite B2 der Gewindeflanken 26 im Halteabschnitt 24.

Die Gewindeflanken 28 im Furchabschnitt 20 sind dadurch stabiler ausgebildet als die Gewindeflanken 26 im Halteabschnitt 24 und sind dadurch in besonderer Weise dafür geeignet, ein Gewinde einzufurchen. Im Halteabschnitt 24 tragen die schmäler ausgebildeten Gewindeflanken 26 hingegen zu einem sehr gut angepassten Eingriff der Gewindeflanken 26 in das in dem Bauteil eingefurchte Gewinde bei. Dadurch wird gegenüber konventionellen Gewindefurchschrauben ein verbesserter Eingriff des Halteabschnitts 24 und dadurch eine erhöhte Tragkraft der Schraube 10 erreicht.

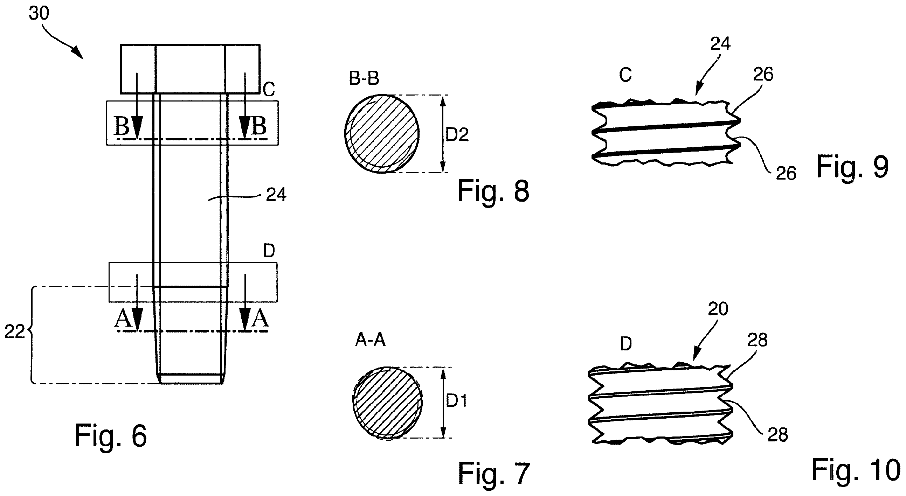

Die Darstellung der Fig. 6 zeigt eine weitere Ausführungsform einer nicht erfindungsgemäßen Schraube 30 zum Einfurchen eines Gewindes. Die Schraube 30 unterscheidet sich von der Schraube 10 der Fig. 1 lediglich in der Gestaltung ihres Furchabschnitts 22. Abgesehen von dem Furchabschnitt 22 ist die Schraube 30 gleich ausgebildet wie die Schraube 10 der Fig. 1 bis 5. Im Folgenden werden daher lediglich die sich unterscheidenden Merkmale der Schraube 30 erläutert.

Der Furchabschnitt 22 ist über seine gesamt Länge kegelstumpfförmig ausgebildet. Der Halteabschnitt 24 ist hingegen zylindrisch ausgebildet. Auch bei der Schraube 30 weist somit der Furchabschnitt 22 gegenüber dem Halteabschnitt 24 einen kleineren Außendurchmesser auf.

Die Darstellung der Fig. 7 zeigt eine Ansicht auf die Schnittebene A-A in Fig. 6. Zu erkennen ist, dass der Furchabschnitt 22 einen kreisförmigen Querschnitt mit einem Durchmesser D1 aufweist.

Fig. 8 zeigt eine Ansicht auf die Schnittebene B-B in Fig. 6. Zu erkennen ist, dass der Halteabschnitt 24 einen kreisförmigen Querschnitt mit einem Außendurchmesser D2 aufweist. Wie ausgeführt wurde, ist der Außendurchmesser D2 im Halteabschnitt 24 größer als der Außendurchmesser D1 im Furchabschnitt 22. Es ist dabei festzustellen, dass der Außendurchmesser D1 des Furchabschnitts 22 aufgrund seiner kegelstumpfförmigen Ausgestaltung langsam ansteigt, bis er am Übergang zum Halteabschnitt 24 zwangsläufig das Maß des Durchmessers D2 des Halteabschnitts 24 erreicht. Mit Ausnahme dieses letzten Übergangs, der als auch Zwischenabschnitt bezeichnet werden kann, ist der Außendurchmesser D1 im Furchabschnitt 22 jedoch kleiner als der Außendurchmesser D2 im Halteabschnitt 24.

Die Darstellung der Fig. 9 zeigt eine vergrößerte Darstellung der Einzelheit C in Fig. 6. Zu erkennen ist, dass der Halteabschnitt 24 der Schraube 30 in gleicher Weise ausgebildet ist wie der Halteabschnitt 24 der Schraube 10 der Fig. 1.

Die Darstellung der Fig. 10 zeigt die Einzelheit D aus Fig. 6 vergrößert. Es ist auch hier zu erkennen, dass der Furchabschnitt 22 in Bezug auf die Gestaltung seiner Gewindeflanken 28 gleich ausgebildet ist wie der Furchabschnitt 20 der Schraube 10 der Fig. 1. Der Unterschied zwischen den Schrauben 10 und 30 liegt somit ausschließlich in der Gestaltung des Furchabschnitts 22, nämlich als kegelstumpfförmiger Abschnitt mit kreisförmigem Querschnitt.

## Patentansprüche

1. Schraube (10) zum Einfurchen eines Gewindes in ein Bauteil, mit einem Schaft (12), der wenigstens abschnittsweise mit einem Gewinde versehen ist, einem Schraubenkopf (14) mit einer Antriebsausbildung, an den sich der Schaft anschließt, wobei, von einem dem Kopf gegenüberliegenden Ende des Schafts (12) ausgehend, zunächst ein Furchabschnitt (20) und dann ein Halteabschnitt (24) angeordnet sind, wobei der Furchabschnitt (20) und der Halteabschnitt (24) mit einem Gewinde versehen sind, wobei der Halteabschnitt (24) gegenüber dem Furchabschnitt (20) einen größeren Außendurchmesser aufweist, wobei zwischen dem Halteabschnitt (24) und dem Furchabschnitt (20) ein kegelstumpfartiger, mit Gewinde versehener Zwischenabschnitt (22) angeordnet ist und wobei der Furchabschnitt (20) einen kegelstumpfartigen Ansetzabschnitt (16) aufweist, wobei der Halteabschnitt (24) einen kreisrunden Querschnitt aufweist, wobei der Furchabschnitt (20) einen vieleckartigen Querschnitt mit abgerundeten Ecken und konvex gewölbten Seitenkanten aufweist, insbesondere einen polylobularen Querschnitt, wobei eine Höhe der Gewindeflanken (26, 28), gemessen in radialer Richtung, im Halteabschnitt (24) größer ist als im Furchabschnitt (20), wobei eine Breite der Gewindeflanken (26, 28), gemessen parallel zu einer Mittellängsachse des Schafts (12), im Furchabschnitt wenigstens an der Basis der Gewindeflanken (26, 28) größer ist als im Halteabschnitt (24) und wobei die Breite (B2, B1) der Gewindeflanken (26, 28) an ihrem radial äußeren Ende im Furchabschnitt (20) größer ist als im Halteabschnitt (24).

2. Schraube nach wenigstens einem der vorstehenden Ansprüche, **dadurch gekennzeichnet, dass** der Halteabschnitt (24) zylindrisch ausgebildet ist.

3. Schraube nach einem der vorstehenden Ansprüche, **dadurch gekennzeichnet, dass** der Furchabschnitt (20) einen zylindrischen Kalibrierabschnitt (18) aufweist.

4. Schraube nach wenigstens einem der Ansprüche 1 bis 3, **dadurch gekennzeichnet, dass** der Furchabschnitt insgesamt kegelstumpfartig ausgebildet ist.

5. Schraube nach wenigstens einem der Ansprüche 1 bis 2, **dadurch gekennzeichnet, dass** der Furchabschnitt eine sich zur Spitze hin verjüngende Form hat, deren Mantellinien gekrümmt sind.

6. Schraube nach Anspruch 5, **dadurch gekennzeichnet, dass** die Mantellinien parabelförmig verlaufen.

7. Schraube nach Anspruch 5 oder Anspruch 6, **dadurch gekennzeichnet, dass** die Mantellinien an einer abgeplatteten Spitze enden.

8. Schraube nach wenigstens einem der vorstehenden Ansprüche, **dadurch gekennzeichnet, dass** ein Übergang zwischen den Gewindeflanken (26) zweier benachbarter Gewindegänge im Halteabschnitt (24) konvex ausgerundet ist.

9. Schraube nach wenigstens einem der vorstehenden Ansprüche, **dadurch gekennzeichnet, dass** ein Übergang zwischen den Gewindeflanken (28) zweier benachbarter Gewindegänge im Furchabschnitt (20) V-förmig ausgebildet ist.

10. Schraube nach wenigstens einem der vorstehenden Ansprüche, **dadurch gekennzeichnet, dass** der Halteabschnitt (24) einen kreisrunden Querschnitt aufweist, dass der Furchabschnitt (20) einen vieleckartigen Querschnitt mit abgerundeten Ecken und konvex gewölbten Seitenkanten aufweist und dass in dem Zwischenabschnitt (22) eine Querschnittsänderung von vieleckartig auf kreisrund erfolgt.

11. Schraube nach wenigstens einem der vorstehenden Ansprüche, **dadurch gekennzeichnet, dass** die Länge des Zwischenabschnitts (22) zwischen dem doppelten und dem dreifachen der Gewindesteigung des Gewindes liegt.

12. Schraube nach Anspruch 10 oder 11, **dadurch gekennzeichnet, dass** der letzte Gewindegang des Zwischenabschnitts (22) am Übergang vom Zwischenabschnitt (22) in den Halteabschnitt (24) einen kreisrunden Querschnitt aufweist.

13. Schraube nach Anspruch 10, 11 oder 12, **dadurch gekennzeichnet, dass** der erste Gewindegang des Zwischenabschnitts (22) am Übergang vom Furchenabschnitt (20) zum Zwischenabschnitt (22) vieleckartig mit abgerundeten Ecken und konvex gewölbten Seitenkanten ausgebildet ist.

14. Schraube nach wenigstens einem der vorstehenden Ansprüche, **dadurch gekennzeichnet, dass** der erste Gewindegang des Ansetzabschnitts (16) am Ende der Schraube einen kreisrunden Querschnitt aufweist.

## Claims

1. Screw (10) for cutting a thread into a component, having a shank (12) which at least in portions is provided with a thread, a screw head (14) having a drive configuration, the latter being adjoined by the shank, wherein, proceeding from an end of the shank (12) that is opposite the head, first a cutting portion (20) and then a holding portion (24) are disposed, wherein the cutting portion (20) and the holding portion (24) are provided with a thread, wherein the holding portion (24) has a larger external diameter in relation to the cutting portion (20), wherein a truncated-cone-type intermediate portion (22) that is provided with a thread is disposed between the holding portion (24) and the cutting portion (20), and wherein the cutting portion (20) has a truncated-cone-type starting portion (16), wherein the holding portion (24) has a circular cross section, wherein the cutting portion (20) has a polygonal cross section having rounded corners and convexly curved lateral edges, in particular a polylobular cross section, wherein a height of the thread flanks (26, 28), measured in the radial direction, in the holding portion (24) is larger than in the cutting portion (20), wherein a width of the thread flanks (26, 28), measured parallel to a central longitudinal axis of the shank (12), in the cutting portion, at least at the base of the thread flanks (26, 28), is larger than in the holding portion (24), and wherein the width (B2, B1) of the thread flanks (26, 28), on the radially outer end thereof, in the cutting portion (20) is larger than in the holding portion (24).

2. Screw according to at least one of the preceding claims, **characterized in that** the holding portion (24) is configured so as to be cylindrical.

3. Screw according to one of the preceding claims, **characterized in that** the cutting portion (20) has a cylindrical calibration portion (18).

4. Screw according to at least one of Claims 1 to 3, **characterized in that** the cutting portion overall is configured in the manner of a truncated cone.

5. Screw according to at least one of Claims 1 to 2, **characterized in that** the cutting portion has a shape that tapers off toward the tip, the envelope lines of said shape being curved.

6. Screw according to Claim 5, **characterized in that** the envelope lines run so as to be parabolic.

7. Screw according to Claim 5 or Claim 6, **characterized in that** the envelope lines terminate at a flattened tip.

8. Screw according to at least one of the preceding claims, **characterized in that** a transition between the thread flanks (26) of two neighbouring thread turns in the holding portion (24) is convexly rounded.

9. Screw according to at least one of the preceding claims, **characterized in that** a transition between the thread flanks (28) of two neighbouring thread turns in the cutting portion (20) is configured so as to be V-shaped.

10. Screw according to at least one of the preceding claims, **characterized in that** the holding portion (24) has a circular cross section, **in that** the cutting portion (20) has a polygonal cross section having rounded corners and convexly curved lateral edges, and **in that** a cross-sectional variation from polygonal to circular is performed in the intermediate portion (22).

11. Screw according to at least one of the preceding claims, **characterized in that** the length of the intermediate portion (22) is between double and triple the thread pitch of the thread.

12. Screw according to Claim 10 or 11, **characterized in that** the last thread turn of the intermediate portion (22) at the transition from the intermediate portion (22) to the holding portion (24) has a circular cross section.

13. Screw according to Claim 10, 11, or 12, **characterized in that** the first thread turn of the intermediate portion (22) at the transition from the cutting portion (20) to the intermediate portion (22) is configured so as to be polygonal having rounded corners and convexly curved lateral edges.

14. Screw according to at least one of the preceding claims, **characterized in that** the first thread turn of the attachment portion (16) at the end of the screw has a circular cross section.

## Revendications

1. Vis (10) pour tarauder un filetage dans un composant, avec une tige (12) qui est munie au moins par sections d'un filetage, une tête de vis (14) avec une configuration d'entraînement à laquelle se raccorde la tige, dans laquelle, en partant d'une extrémité de la tige (12) opposée à la tête, sont agencées d'abord une section de taraudage (20) et ensuite une section de maintien (24), dans laquelle la section de taraudage (20) et la section de maintien (24) sont munies d'un filetage, dans laquelle la section de maintien (24) présente un diamètre extérieur plus grand par rapport à la section de taraudage (20), dans laquelle une section intermédiaire (22) tronconique munie d'un filetage est agencée entre la section de maintien (24) et la section de taraudage (20), et dans laquelle la section de taraudage (20) présente une section de commencement (16) tronconique, dans laquelle la section de maintien (24) présente une section transversale circulaire, dans laquelle la section de taraudage (20) présente une section transversale polygonale avec des coins arrondis et des bords latéraux bombés de manière convexe, notamment une section transversale polylobée, dans laquelle une hauteur des flancs de filetage (26, 28), mesurée dans la direction radiale, est plus grande dans la section de maintien (24) que dans la section de taraudage (20), dans laquelle une largeur des flancs de filetage (26, 28), mesurée parallèlement à un axe longitudinal central de la tige (12), est plus grande dans la section de taraudage au moins à la base des flancs de filetage (26, 28) que dans la section de maintien (24) et dans laquelle la largeur (B2, B1) des flancs de filetage (26, 28) à leur extrémité radialement extérieure est plus grande dans la section de taraudage (20) que dans la section de maintien (24).

2. Vis selon au moins l'une quelconque des revendications précédentes, **caractérisée en ce que** la section de maintien (24) est configurée sous forme cylindrique.

3. Vis selon l'une quelconque des revendications précédentes, **caractérisée en ce que** la section de taraudage (20) présente une section de calibrage cylindrique (18).

4. Vis selon au moins l'une quelconque des revendications 1 à 3, **caractérisée en ce que** la section de taraudage est configurée sous forme globalement tronconique.

5. Vis selon au moins l'une quelconque des revendications 1 à 2, **caractérisée en ce que** la section de taraudage a une forme qui se rétrécit vers la pointe, dont les génératrices sont courbées.

6. Vis selon la revendication 5, **caractérisée en ce que** les génératrices sont paraboliques.

7. Vis selon la revendication 5 ou la revendication 6, **caractérisée en ce que** les génératrices se terminent au niveau d'une pointe aplatie.

8. Vis selon au moins l'une quelconque des revendications précédentes, **caractérisée en ce qu'**une transition entre les flancs de filetage (26) de deux filets voisins dans la section de maintien (24) est arrondie de manière convexe.

9. Vis selon au moins l'une quelconque des revendications précédentes, **caractérisée en ce qu'**une transition entre les flancs de filetage (28) de deux filets voisins est configurée en forme de V dans la section de taraudage (20).

10. Vis selon au moins l'une quelconque des revendications précédentes, **caractérisée en ce que** la section de maintien (24) présente une section transversale circulaire, **en ce que** la section de taraudage (20) présente une section transversale polygonale avec des coins arrondis et des bords latéraux bombés de manière convexe et **en ce qu'**une modification de la section transversale de polygonale à circulaire a lieu dans la section intermédiaire (22).

11. Vis selon au moins l'une quelconque des revendications précédentes, **caractérisée en ce que** la longueur de la section intermédiaire (22) est comprise entre le double et le triple du pas de vis du filetage.

12. Vis selon la revendication 10 ou 11, **caractérisée en ce que** le dernier filet de la section intermédiaire (22) présente une section transversale circulaire à la transition de la section intermédiaire (22) à la section de maintien (24).

13. Vis selon la revendication 10, 11 ou 12, **caractérisée en ce que** le premier filet de la section intermédiaire (22), à la transition de la section de taraudage (20) à la section intermédiaire (22), est configuré sous forme polygonale avec des coins arrondis et des bords latéraux bombés de manière convexe.

14. Vis selon au moins l'une quelconque des revendications précédentes, **caractérisée en ce que** le premier filet de la section d'attache (16) à l'extrémité de la vis présente une section transversale circulaire.
